# EUROPEAN PATENT SPECIFICATION

(11) **EP 4 663 601 B1**
(45) Date of publication and mention of the grant of the patent: **24.06.2026**
(21) Application number: 24182809.4
(22) Date of filing: 18.06.2024
(51) Int. Cl.: C01B 17/69, C01B 17/90

(54) **SYSTEM FOR PRODUCING PURE SULFURIC ACID**
SYSTEM ZUR HERSTELLUNG REINER SCHWEFELSÄURE
SYSTÈME DE PRODUCTION D'ACIDE SULFURIQUE PUR

(30) Priority: 14.06.2024 KR 20240077338
(43) Date of publication of application: 17.12.2025
(73) Proprietor: LS MnM Inc., Ulsan 44997 (KR)
(72) Inventor: JUNG, Tae Hwan, 48109 Busan (KR); KIM, Byung Chae, 44654 Ulsan (KR); KIM, Chang Buhm, 42049 Daegu (KR); JUNG, Jae Hee, 44737 Ulsan (KR); LEE, Choong-Sin, 44751 Ulsan (KR)
(74) Representative: Viering, Jentschura & Partner mbB Patent- und Rechtsanwälte

(56) References cited:
- CN-A- 105 565 281
- CN-A- 105 621 374
- CN-B- 110 155 955
- JP-A- 2000 302 420

## Description

### Field of the Invention

The present disclosure relates to a system for producing pure sulfuric acid and, more particularly, to a system for producing pure sulfuric acid, the system being capable of enabling automatic control of production volume and acid concentration.

### Description of the Related Art

Pure sulfuric acid (PSA) is used as an essential chemical in various industrial and scientific fields.

In particular, it is mainly used in a cleaning process to remove residual foreign substances during semiconductor manufacturing. PSA is mixed with hydrogen peroxide (H₂SO₄:H₂O₂) and used in the "piranha" cleaning method to remove organic substances.

The production of such PSA requires a very delicate and sophisticated process to ensure quality and stability. In other words, in order to maintain the quality of the final product, raw materials, i.e., SO₃ and ultrapure water, are purified through several stages of processing, and manufacturing equipment that uses special materials that do not elute impurities is used.

Examples of a conventional sulfuric acid production apparatus are disclosed in Korean Patent Publication No. 10-1541908, entitled "Apparatus of manufacturing ultrapure electronic-grade sulfuric acid", and Korean Patent No. 10-1675947, entitled "Device for producing high purity sulfuric acid".

The former of the related art technologies refers to an apparatus of manufacturing ultrapure electronics-grade sulfuric acid, the apparatus including a steam evaporator for maintaining a uniform temperature by supplying steam, a nitrogen gas injector located at the rear end of an absorber and preventing introduction of impurities contained in the external air, a mixer for mixing water and sulfuric acid, and a seal port for discharging waste gas. The steam evaporator includes an inner housing formed in a cylindrical shape, accommodating sulfur trioxide (SO₃) therein, and having a plurality of valves on upper and inner peripheral surfaces thereof; an outer housing surrounding the outside of the inner housing and having a space between the outer housing and the inner housing; and a steam introduction pipe formed on an outer peripheral surface of the outer housing and injecting steam into the space between the outer housing and the inner housing.

In addition, the later of the related art technologies relates to a device for producing high purity sulfuric acid, the device including a sulfur trioxide evaporator for vaporizing sulfur trioxide (SO₃) by heating it to a predetermined temperature; a sulfur trioxide purifier for receiving the vaporized sulfur trioxide from the evaporator and removing foreign substances in the vaporized sulfur trioxide; a sulfur trioxide absorber for bringing the sulfur trioxide delivered from the purifier into gas-liquid contact with generated sulfuric acid to increase the purity of the sulfuric acid, and circulating the sulfuric acid; a stripping tower for separating unabsorbed and dissolved gas from the sulfuric acid delivered from the absorber and circulating the sulfuric acid; and a sulfuric acid mist separator for collecting the sulfuric acid in the unabsorbed gas delivered from the stripping tower.

The above-described related art technologies are based on the use of sulfur trioxide as a raw material, and involves processes such as sulfur trioxide evaporation, sulfur trioxide absorption, and pure sulfuric acid stripping. Nitrogen is introduced to produce pure sulfuric acid, or three-stage and four-stage packed towers are included in the sulfur trioxide evaporator, the sulfur trioxide absorber, and the stripping tower, respectively, to obtain pure sulfuric acid with reduced impurities.

However, the above-described related art technologies have the following drawbacks. It is not easy to control the acid concentration due to the process consisting of sulfur trioxide absorption, stripping, and storage, so the deviation in acid concentration increases, making it difficult to obtain pure sulfuric acid with stable concentration.

Additionally, it is difficult to provide pure sulfuric acid because the concentration of residual foreign substances resulting from evaporation of sulfur trioxide increases, which may cause a desired purification level to be not achieved.

Additionally, when acid circulating inside the stripping tower meets dilution water and is not evenly diluted at the top of a stripping tower, the exothermic reaction occurs unevenly, raising the risk of damage to internal equipment due to local overheating. Additionally, since the acid is circulated in the stripping tower for dilution, separate energy input and equipment are required.

Additionally, when the circulating acid is supplied directly from the bottom of the absorber to a circulation pump and emergency situation such as an unexpected power outage occurs and the pump operation is stopped thereby, the circulating acid may build up at the bottom of the absorber and overflow. In this case, reorganization, repair, and maintenance work of equipment for normal operation is quite demanding and requires significant time and cost.

Additionally, since there is no automatic control technology for the flow rate of steam or ultrapure water, the equipment setting needs to be re-performed in order to adjust the production volume, the concentration of circulating acid, or the amount of circulating acid.

Additionally, since there is no automatic control technology to adjust the acid concentration of circulating acid, manual work needs to be performed to measure the acid concentration, which may result in acid concentration deviation.

Further known systems are described in JP 2000 302420 A, CN 110 155 955 B, CN 105 621 374 A, and CN 105 565 281 A.

### Disclosure

### Technical Problem

Accordingly, the present disclosure has been made keeping in mind the above problems occurring in the related art, and one objective of the present disclosure is to provide a system for producing pure sulfuric acid, in which a mixer is provided in each of an absorption unit and a stripping unit to provide ultrapure water individually, so uniform mixing in the absorption unit and the stripping unit is possible and the heat load in the absorption unit is reduced, thereby ensuring stable operation of equipment and maintaining durability of the entire system.

Another objective of the present disclosure is to provide a system for producing pure sulfuric acid with a receiver tank, in which the receiver tank is employed to prevent an overflow accident from occurring in an emergency situation and protect equipment.

Another objective of the present disclosure is to provide a system that employs a receiver tank and an in-line concentration meter to automatically control production volume and the concentration of circulating acid or amount of circulating acid.

### Technical Solution

In order to achieve the above objectives, according to one aspect of the present disclosure, there is provided a system for producing pure sulfuric acid, the system including: a vaporization unit that receives liquid SO₃ (L-SO₃) and generates SO₃ gas; an absorption unit that receives the SO₃ gas from the vaporization unit and mixes the SO₃ gas with ultrapure water to generate and circulate primary pure sulfuric acid (PSA); a stripping unit that removes gases contained in the primary PSA supplied from the absorption unit and mixes the primary PSA with the ultrapure water to generate a secondary PSA with a relatively lower concentration than the primary PSA; and a storage unit that stores the secondary PSA.

Additionally, the absorption unit includes: an absorption tower that receives the SO₃ gas from the vaporization unit; a receiver tank that is provided downstream of the absorption tower and receives the circulating primary PSA; a circulation pump that is provided on a circulation path on one side of the receiver tank, circulates the primary PSA, and supplies a part of the primary PSA to the stripping unit; and an absorption acid cooler that is provided on the circulation path.

Additionally, a weigher is provided on one side of the receiver tank to detect a level of the receiver tank. Additionally, the weigher cooperates with the vaporization unit with consideration of an amount of steam supplied to the vaporization unit.

Additionally, the system may be configured to have the liquid L-SO₃ being provided by forming SO₃ gas through a sulfuric acid converter using smelting gas and then evaporating and condensing fuming sulfuric acid formed through an oleum tower.

Here, a spent pump may be provided downstream of the vaporization unit to discharge concentrated L-SO₃ to a spent tank.

Additionally, a hot water tank may be provided on one side of the vaporization unit to supply hot water to the vaporization unit when necessary.

Here, a first mixer that supplies a first mixed acid, which is a mixture of the circulating primary PSA supplied from the receiver tank and the ultrapure water, to the absorption tower may be provided upstream of the absorption tower.

Additionally, the weigher of the receiver tank may be a load cell-type weigher that is provided between a frame that receives a load of the receiver tank and a support that supports the frame.

Additionally, a concentration meter may be provided between the absorption tower and the receiver tank to measure a concentration of the primary PSA supplied from the absorption tower to the receiver tank through in-line measurement. Additionally, the concentration meter cooperates with the absorption tower with consideration of a flow rate of the ultrapure water supplied to the absorption tower.

Additionally, the stripping unit may include: a stripping tower that receives the primary PSA from the absorption unit; and a stripped acid cooler that is connected to stripping tower.

Additionally, a second mixer that supplies a second mixed acid, which is a mixture of the primary PSA supplied from the absorption unit and the ultrapure water, to the stripping tower may be further provided upstream of the stripping tower.

Additionally, the second mixer may include: a mixing tank; an ultrapure water introduction pipe that is provided on one side of the mixing tank and supplies the ultrapure water into the mixing tank; a circulating acid supply pipe that is connected to one side of the ultrapure water introduction pipe and supplies the primary PSA supplied from the absorption unit into the mixing tank; and a mixed acid discharge pipe that is provided on a lower side of the mixing tank and discharges the second mixed acid, which is a mixture of the primary PSA and the ultrapure water, from the mixing tank.

Additionally, the circulating acid supply pipe may be formed in a double dip pipe structure with the ultrapure water introduction pipe, and may mix the primary PSA with the ultrapure water at an end of the circulating acid supply pipe and supply a mixed acid into the mixing tank.

### Advantageous Effects

According to the present disclosure, by providing a mixer in each of an absorption unit and a stripping unit to provide ultrapure water individually. This reduces the heat load in the absorption unit, thereby ensuring stable operation of the entire equipment and maintaining durability of the entire system.

Additionally, by providing the mixer in each of the absorption unit and the stripping unit to provide ultrapure water individually, it is possible to promote easy control of the acid concentration, which is advantageous in reducing the deviation in the acid concentration.

Additionally, by discharging remaining foreign substances resulting from vaporization of sulfur trioxide, i.e., concentrated sulfur trioxide, from the vaporizer, it is possible to achieve a desired purification level and obtain pure sulfuric acid.

Additionally, by supplying a first mixed acid and a second mixed acid, which are mixtures of primary PSA and ultrapure water, to the absorption unit and the stripping unit from a first mixer and a second mixer, an exothermic reaction occurs evenly throughout the absorption unit and the stripping unit, thereby eliminating the possibility of degrading the durability of internal equipment. Also, there is no need for separate energy input or equipment for circulation of circulating acid in the stripping unit, thereby facilitating simplification of process equipment.

Additionally, by employing a receiver tank provided in the absorption unit, it is possible to prevent an overflow accident from occurring in an emergency situation and protect equipment. That is, the situation where circulating acid builds up at the bottom of an absorption tower is eliminated. This minimizes the reaction of circulating acid with SO₃ gas introduced from an vaporizer, thereby minimizing damage to an internal lining caused by heat generation occurring at the bottom when acid circulation is stopped.

Additionally, by automatically controlling the amount of heat source supplied to the vaporizer according to the change in the level of the receiver tank, it is possible to enable precise control of the amount of L-SO₃ vaporized, and by controlling the flow rate of supplied ultrapure water according to the concentration of circulating acid passing through the absorption tower, it is possible to enable stable concentration control through automatic control of the concentration of circulating acid.

### Brief Description of Drawings

FIG. 1 is a schematic view illustrating a system for producing pure sulfuric acid according to an embodiment of the present disclosure.
FIGS. 2 and 3 are schematic views illustrating a second mixer according to an embodiment of the present disclosure.
FIG. 4 is a schematic view illustrating the structure of a receiver tank and a weigher according to an embodiment of the present disclosure.

### Detailed Description of Invention

The present disclosure provides a system for producing pure sulfuric acid, in which a mixer is provided in each of an absorption unit and a stripping unit to provide ultrapure water individually, so the heat load in the absorption unit is reduced, thereby ensuring stable operation of equipment and maintaining durability of the entire system.

Additionally, the present disclosure employs a receiver tank provided in the absorption unit to prevent an overflow accident from occurring in an emergency situation and protect equipment.

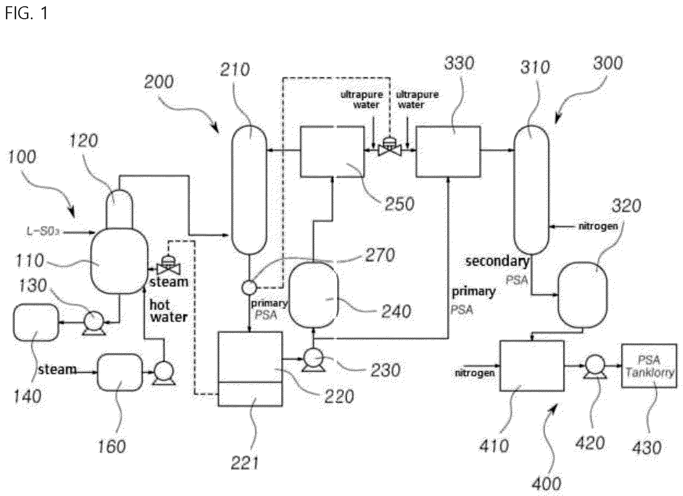

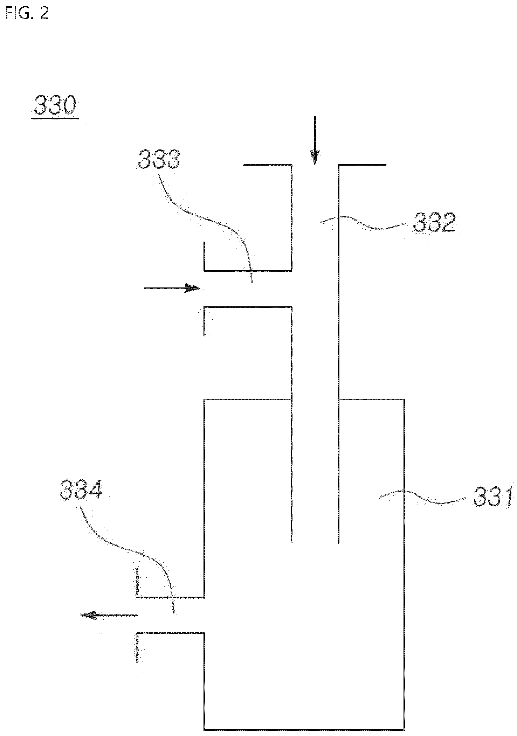

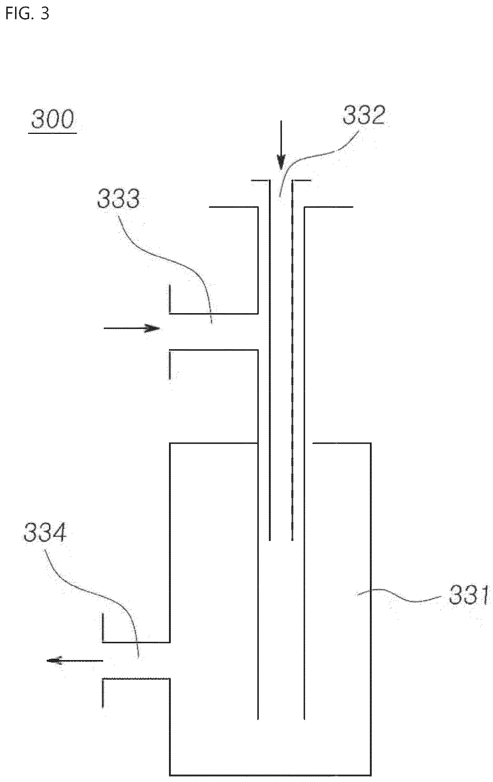

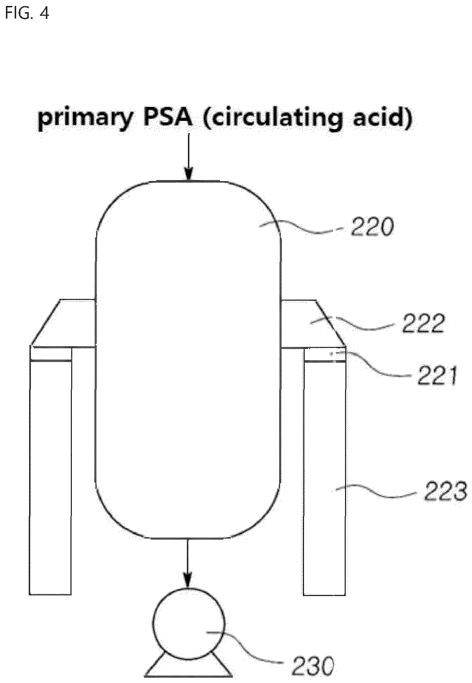

Hereinbelow, an exemplary embodiment of the present disclosure will be described in detail with reference to the accompanying drawings. FIG. 1 is a schematic view illustrating a system for producing pure sulfuric acid according to an embodiment of the present disclosure. FIGS. 2 and 3 are schematic views illustrating a second mixer according to an embodiment of the present disclosure. FIG. 4 is a schematic view illustrating the structure of a receiver tank and a weigher according to an embodiment of the present disclosure.

As illustrated, the system for producing pure sulfuric acid according to the present disclosure includes an vaporization unit 100 that receives liquid SO₃ (L-SO₃) and generates SO₃ gas; an absorption unit 200 that receives the SO₃ gas from the vaporization unit 100 and mixes it with ultrapure water to generate and circulate primary pure sulfuric acid (PSA); a stripping unit 300 that strips gases contained in the primary PSA supplied from the absorption unit 200 and mixes it with the ultrapure water to generate secondary PSA with a relatively lower concentration than the primary PSA; and a storage unit 400 that stores the secondary PSA.

The liquid SO₃ (L-SO₃) according to an embodiment of the present disclosure is provided by forming SO₃ gas through a sulfuric acid converter using smelting gas and then evaporating and condensing fuming sulfuric acid formed through an oleum tower. However, the provision of the liquid SO₃ (L-SO₃) is not limited to thereto, and it may be produced using by-products or resulting materials from various processes.

In particular, since the present disclosure uses sulfur trioxide (L-SO₃) in a liquid state, there is no need for processes such as burning sulfur or sulfur compounds to produce sulfur dioxide or catalytic oxidation of sulfur dioxide to produce a gas containing sulfur trioxide.

In the present disclosure, such L-SO₃ is stored in a storage tank, passed through a filter, and pumped and supplied to the vaporization unit 100. The vaporization unit 100 vaporizes the L-SO₃ to generate SO₃ gas.

The vaporization unit 100 according to an embodiment of the present disclosure includes a vaporizer 110 that receives the L-SO₃ and receives steam to convert the L-SO₃ into the SO₃ gas; a packed tower 120 that is provided on the top of the vaporizer 110 and allows the SO₃ gas to pass therethrough.

The vaporizer 110 is formed in a jacket structure. The L-SO₃ is supplied into the vaporizer 110, and the steam is supplied between jackets to heat the L-SO₃ in the vaporizer 110, resulting in the SO₃ gas.

The packed tower 120 is provided on the top of the vaporizer 110, and allows the SO₃ gas to pass therethrough. The packed tower is a structure optimized to control the path of the SO₃ gas, remove impurities, and process the SO₃ gas more uniformly to ultimately produce pure sulfuric acid. With this, the SO₃ gas can be efficiently generated with the use of the L-SO₃, thereby making it possible to produce pure sulfuric acid.

Additionally, according to an embodiment of the present disclosure, a spent pump is provided downstream of the vaporizer 110 to discharge concentrated L-SO₃ to a spent tank 140. That is, the spent pump functions to increase impurity removal efficiency through discharge of the L-SO₃ inside the vaporizer 110.

The L-SO₃ is vaporized and converted into the SO₃ gas by maintaining a predetermined pressure and temperature inside the vaporizer 110. In this case, the concentration of foreign substances remaining after SO₃ gas vaporization increases, making it impossible to achieve a desired purification level.

While continuously supplying the necessary L-SO₃, a small amount of L-SO₃ is continuously discharged from the bottom of the vaporizer 110 through the spent pump 130 and stored in the spent tank 140 through a spent pipe. The spent tank 140 is connected to an L-SO₃ storage tank so that the discharged L-SO₃ is recycled or treated separately.

With this, substances, which can be concentrated inside (mainly the bottom) of the vaporizer 110, other than the SO₃ gas are discharged to the outside, thereby preventing a reduction in impurity purification efficiency caused by continuous concentration. Additionally, efficient use of materials and production process stability can be improved during the production of pure sulfuric acid.

If necessary, a demister with a filling layer inserted therein may be provided at the top of the vaporizer 110 to collect solid or liquid particles floating in gas.

Meanwhile, according to an embodiment of the present disclosure, a hot water tank 160 may be provided on one side of the vaporizer 110 to supply hot water to the vaporizer 110 when necessary.

In general, the L-SO₃ is solidified below a predetermined temperature. To melt the solid L-SO₃, a heat source of a fairly high temperature is required, and during the melting of the solid L-SO₃, the vapor pressure is momentarily generated at a very high level, causing a strain on equipment. The hot water tank 160 supplies hot water to the vaporizer 110 when necessary to prevent the L-SO₃ from solidifying.

The absorption unit 200 according to an embodiment of the present disclosure receives the SO₃ gas from the vaporization unit 100 and mixes it with the ultrapure water to generate and circulate primary pure sulfuric acid (PSA).

That is, after the SO₃ gas is generated in the vaporization unit 100, it is transferred to the absorption unit 200. Here, the SO₃ gas is mixed with the ultrapure water to generate the primary PSA, and the resulting primary PSA is circulated along a circulation path.

According to the present disclosure, the absorption unit 200 includes an absorption tower 210 that receives the SO₃ gas from the vaporization unit 100; a receiver tank 220 that is provided downstream of the absorption tower 210 and receives the circulating primary PSA; a circulation pump 230 that is provided on a circulation path on one side of the receiver tank 220, circulates the primary PSA, and supplies a part of the primary PSA to the stripping unit 300; and an absorption acid cooler 240 that is provided on the circulation path.

The absorption tower 210 receives the SO₃ gas generated from the vaporization unit 100 and brings it into contact with circulating acid to generate high concentration circulating acid (primary PSA). At this time, circulating acid with high purity may be supplied in advance to the receiver tank 220 and then used as the first circulating acid.

The receiver tank 220 is provided downstream of the absorption tower 210 and receives the circulating primary PSA. The primary PSA is circulated by the circulation pump 230, and a part of the primary PSA is supplied to the stripping unit 300. The absorption acid cooler 240 is provided on the circulation path and controls the temperature of the circulating primary PSA, thereby improving process stability and efficiency.

The receiver tank 220 is provided downstream of the absorption tower 210 to receive the circulating acid. The receiver tank functions to prevent cavitation of the circulation pump 230 and prevent the circulating acid from overflowing in the event of an emergency power outage. Additionally, the level of the receiver tank 220 is managed to be kept at a stable level with consideration of the amount of steam input and the like, thereby enabling automatic operation.

According to an embodiment of the present disclosure, a first mixer 250 that supplies a first mixed acid, which is a mixture of the circulating primary PSA supplied from the receiver tank 220 and the ultrapure water, to the absorption tower 210 is provided upstream of the absorption tower 210.

That is, the SO₃ gas is supplied to the lower side of the absorption tower 210, and the first mixed acid, which is a mixture of the ultrapure water and the primary PSA, is supplied from the first mixer 250 to the upper side of the absorption tower 210 and comes into contact with SO₃, thereby increasing the concentration of the circulating acid. In this case, the ultrapure water is mixed with the circulating primary PSA to maintain an appropriate concentration and components required during the production of pure sulfuric acid. That is, the concentration of the circulating acid is controlled by the amount of ultrapure water supplied.

As the first mixed acid, which is a mixture of the primary PSA and the ultrapure water, is supplied from the first mixer 250 to the absorption unit (absorption tower) 200, an exothermic reaction occurs evenly throughout the absorption tower 210, thereby minimizing a degradation in durability of internal equipment.

Here, the primary PSA whose temperature has increased due to the exothermic reaction in the first mixer 250 undergoes heat exchange through the absorption acid cooler 240 provided on the circulation path, thereby lowering its temperature. In other words, the temperature of the circulating primary PSA is adjusted to promote process stability and efficiency.

One or more absorption acid coolers 240 may be provided as necessary, and a spare cooler may be disposed for emergency purposes.

Meanwhile, when the circulating acid is supplied directly from the bottom of the absorption tower 210 to the circulation pump 230 and emergency situation such as an unexpected power outage occurs and the pump operation is stopped thereby, the circulating acid may build up at the bottom of the absorption tower 210 and overflow. In this case, reorganization, repair, and maintenance work of equipment for normal operation is quite demanding and requires significant time and cost.

To overcome this problem, the present disclosure employs the receiver tank 220 provided downstream of the absorption tower 210. As described above, the receiver tank 220 is provided downstream of the absorption tower 210 to receive the circulating acid. The receiver tank functions to prevent cavitation of the circulation pump 230 and prevent the circulating acid from overflowing in the event of an emergency power outage. Additionally, the level of the receiver tank 220 is managed to be kept at a stable level with consideration of the amount of steam input and the like, thereby enabling automatic operation.

Additionally, conventionally, since there is no automatic control technology for the flow rate of steam or ultrapure water, the equipment setting needs to be re-performed in order to adjust the concentration of circulating acid or the amount of circulating acid, which is a cumbersome process.

To overcome this problem, the present disclosure employs a weigher 221 provided on one side of the receiver tank 220 to detect the level of the receiver tank 220. The weigher cooperates with the vaporization unit 100 with consideration of steam supplied to the vaporizer unit 100.

As illustrated in FIG. 4, the weigher 221 of the receiver tank 220 according to an embodiment of the present disclosure is provided between a frame 222 that receives the load of the receiver tank 220 and a support 223 that supports the frame 222, and may be a load cell-type weigher 221. However, the present disclosure is not limited thereto, and the weigher 221 may be any type of weigher structure as long as it is provided on one side of the receiver tank 220 and can measure the weight or level of the circulating acid inside the receiver tank 220.

Additionally, a weight confirmation method using the weigher 221 enables more precise measurement than a method using a general tank internal sensor and eliminates the possibility of contamination caused by the tank internal sensor.

Additionally, an in-line concentration meter 270 that measures the concentration of the circulating primary PSA may be provided on one side of the receiver tank 220. The in-line concentration meter 270 cooperates with the flow rate of the ultrapure water supplied to the absorption tower.

That is, it is possible to automatically control the amount of heat source supplied to the vaporizer 110 according to the change in the level of the receiver tank 220, thereby enabling precise control of the amount of L-SO₃ vaporized, and to control the flow rate of the supplied ultrapure water according to the concentration of the circulating acid passing through the absorption tower 210, thereby enabling stable concentration control through automatic control of the concentration of the circulating acid.

Additionally, the stripping unit 300 according to an embodiment of the present disclosure strips the gases contained in the primary PSA supplied from the absorption unit 200 and mixes it with the ultrapure water to generate the secondary PSA with a relatively lower concentration than the primary PSA. In this process, the gases contained in the primary PSA are removed and then the primary PSA is mixed with the ultrapure water, resulting in the secondary PSA with a relatively low concentration.

The stripping unit 300 according to an embodiment of the present disclosure includes a stripping tower 310 that receives the primary PSA from the absorption unit 200, and a stripped acid cooler 320 that is connected to the stripping tower 310.

The stripping tower 310 receives the primary PSA from the absorption unit 200, removes the gases contained in the primary PSA, and provides pure sulfuric acid. That is, the stripping tower 310 performs a process of removing SO2 gas after the reaction is completed.

The stripped acid cooler 320 is connected to the stripping tower 310, and controls the temperature of the generated secondary PSA, thereby promoting the stability of a sulfuric acid production process and maintaining the durability of equipment. Additionally, conventionally, sulfuric acid is discharged without undergoing separate cooling, so it is impossible to control the product temperature to a desired level. This is disadvantageous in that the product temperature varies depending on the summer or winter season, leading to fluctuating product quality. However, in the present disclosure, this problem is solved by providing the stripped acid cooler 320 to actively control the temperature of the secondary PSA.

That is, the stripped acid cooler 320 functions to control the temperature of stripped acid in response to a temperature increase due to an exothermic reaction in a second mixer 330 and at the same time to prevent equipment at the rear end of the cooler from being damaged due to excessive temperature.

Additionally, nitrogen gas is supplied to the stripping tower 310. The nitrogen gas is used to suppress an oxidation reaction, stabilize the reaction environment, and remove gases.

Meanwhile, the second mixer 330 that supplies a second mixed acid, which is a mixture of the primary PSA supplied from the absorption unit 200 and the ultrapure water, to the stripping tower 310 is further provided upstream of the stripping tower 310. That is, the present disclosure provides a mixer in each of the absorption unit 200 and the stripping unit 300 to mix the circulating acid and the ultrapure water in advance and supply the mixture to the absorption tower 210 and the stripping tower 310. This helps distribute the heat load and prevents the heat load from being concentrated locally, thereby ensuring stable operation of equipment.

Therefore, the present disclosure supplies the second mixed acid, which is a mixture of the primary PSA and the ultrapure water, to the stripping unit 300 through the second mixer 330, so the exothermic reaction occurs evenly throughout the stripping unit 300, thereby eliminating the possibility of degrading the durability of internal equipment. Also, there is no need for separate energy input or equipment for circulation of the circulating acid in the stripping unit 300, thereby facilitating simplification of process equipment.

Additionally, there is no need for a separate circulation pump, so operating costs (electricity) can be reduced, and only parts that generate heat need to be repaired or replaced after long-term use, thereby reducing maintenance costs.

Here, the temperature of the secondary PSA, which has increased due to the exothermic reaction in the second mixer 330, undergoes heat exchange through the stripping tower cooler 320, thereby lowering its temperature and ensuring process stability. One or more stripped acid coolers 320 may also be provided as necessary.

Additionally, the second mixer 330 according to an embodiment of the present disclosure includes a mixing tank 331; an ultrapure water introduction pipe 332 that is provided on an upper side of the mixing tank 331 and supplies the ultrapure water into the mixing tank 331; a circulating acid supply pipe 333 that is provided in communication with one side of the ultrapure water introduction pipe 332, and supplies the primary PSA supplied from the absorption unit 200 into the mixing tank 331 so as to be mixed with the ultrapure water; and a mixed acid discharge pipe 334 that is provided on a lower side of the mixing tank 331 and discharges the second mixed acid, which is a mixture of the primary PSA and the ultrapure water (see FIG. 2).

That is, the ultrapure water and the primary PSA are mixed outside the mixing tank 331 and supplied into the mixing tank 331 in the form of the second mixed acid, and the second mixed acid exiting the mixing tank is supplied to the stripping tower 310 through the mixed acid discharge pipe 334. The first mixer 250 may also have a similar structure to the second mixer 330. To uniformly mix the circulating acid and the ultrapure water, the positions of the ultrapure water introduction pipe 332 and the circulating acid supply pipe 333 may be changed or the numbers may be adjusted.

Additionally, in another embodiment of the present disclosure, the circulating acid supply pipe 333 may be formed in a double pipe structure with the ultrapure water introduction pipe 332, and mixes the primary PSA with the ultrapure water at the end of the circulating acid supply pipe 333 and supplies a mixed acid into the mixing tank 331 (see FIG. 3). Such a double pipe structure enables the circulating acid and the ultrapure water to be mixed more evenly.

Here, the double pipe structure composed of the circulating acid supply pipe 333 located outside and the ultrapure water introduction pipe 332 located inside may be formed such that the outer circulating acid supply pipe 333 is formed to be longer inside the mixing tank 331 than the inner ultrapure water introduction pipe. As the circulating acid and the ultrapure water passing through the ultrapure water introduction pipe 332 are mixed at the end of the circulating acid supply pipe 333 and then supplied to the mixing tank 331, the mixed acid (mixture of the circulating acid and the ultrapure water) is supplied to the stripping tower 310 at a more uniform density, thereby inducing a more uniform exothermic reaction in the stripping tower 310.

The concentration of the primary PSA passing through the absorption unit 200 as described above is about 97% to 99%. A part of the primary PSA is circulated through the absorption unit 200, and another part thereof is supplied to the stripping unit 300 and mixed with the ultrapure water, thereby adjusting its concentration. Therefore, the concentration of the secondary PSA may be formed in the range of 95 to 97%, which is about 2% lower than that of the primary PSA. The concentration of PSA obtained may be adjusted by adjusting the flow rate of the ultrapure water in the absorption unit 200 and the stripping unit 300.

Meanwhile, according to an embodiment of the present disclosure, the first mixer 250 in which the circulating primary PSA and the ultrapure water are mixed is provided on one side of the absorbent unit 200 to supply the first mixed acid to the absorption unit 200, and the second mixer 330 in which the primary PSA supplied from the absorption unit 200 and the ultrapure water are mixed is provided on one side of the stripping unit 300 to supply the second mixed acid to the stripping unit 300.

This is to control the flow rate of the circulating acid (primary PSA) and the flow rate of the ultrapure water supplied to the first mixer 250 of the absorption unit 200 and the second mixer 330 of the stripping unit 300, thereby designing the degree of distribution of the heat load and adjusting an optimal acid concentration or minimizing a deviation in acid concentration depending on the process environment.

In the embodiment of the present disclosure, it has been described that the acid concentration is controlled in two stages, but if necessary, the acid concentration may be controlled in three or four stages. In this case, the flow rate of the mixed acid may be determined by adjusting and providing an appropriate flow rate of the circulating acid and the ultrapure water for each mixer, and the determined flow rate may be supplied to the absorption unit 200, the stripping unit 300, and the like to enable fine control of the acid concentration.

The secondary PSA from which impurities have been removed and whose concentration has been finally adjusted is stored in the storage unit 400 and then sent out.

The storage unit 400 according to an embodiment of the present disclosure includes a storage tank 410 that stores the secondary PSA supplied from the stripping unit 300, and a loading pump 420 that is connected to the storage tank 410. PSA is supplied to a PSA tank lorry 430 and released as a product. The storage tank 410 stably stores the secondary PSA and supplies it when necessary, and is made of a chemically stable material. The secondary PSA stored in the storage tank 410 is transferred to a necessary location by the loading pump 420.

Additionally, the storage unit 400 according to an embodiment of the present disclosure includes a storage tank 410 that stores the secondary PSA supplied from the stripping unit 300, a loading pump 420 that is connected to the storage tank 410, a multi-stage filtering part (not illustrated) that is connected to the loading pump 420, and an automatic clean quick coupler (ACQC) (not illustrated) that is connected to the filtering part. PSA is supplied to a PSA tanklorry 430 and released as a product.

The secondary PSA stored in the storage tank 410 is transferred to the multi-stage filtering part by the loading pump 420 to finally remove impurities that may be generated during the production of sulfuric acid before using the secondary PSA. The multi-stage filtering part (pre/final /loading) uses nano-scale filters. In an embodiment of the present disclosure, filters made of a material such as polyvinylidene fluoride (PVDF) or polytetrafluoroethylene (PTFE), which are stable to sulfuric acid, may be used.

The automatic clean quick coupler (ACQC) has automated functions and operates automatically without operator intervention. It is a device that is easy to maintain and replace, and improves the quality of the final product by increasing process flexibility and providing accurate and consistent results, thereby ensuring process stability and quality. With this, the PSA is directly provided to the PSA tanklorry 430 and released as a product.

Nitrogen gas is supplied to the storage tank 410 to externally seal the storage tank, thereby preventing introduction of external impurities and leakage of internal liquid and thus maintaining the stability of the sulfuric acid production process.

As described above, the present disclosure provides the system for producing pure sulfuric acid, in which the mixer is provided in each of the absorption unit and the stripping unit to provide ultrapure water individually. This reduces the heat load in the absorption unit, thereby ensuring stable operation of equipment and maintaining durability of the entire system.

Additionally, the present disclosure provides the system for producing pure sulfuric acid with the receiver tank, in which the receiver tank is employed to prevent an overflow accident from occurring in an emergency situation and protect equipment. Additionally, by employing the receiver tank, the situation where circulating acid builds up at the bottom of the absorption tower is eliminated. This minimizes the reaction of the circulating acid with SO₃ gas introduced from the vaporizer, thereby minimizing damage to an internal lining caused by heat generation occurring at the bottom when acid circulation is stopped.

Additionally, by automatically controlling the amount of heat source supplied to the vaporizer according to the change in the level of the receiver tank, it is possible to enable precise control of the amount of L-SO₃ vaporized, and by controlling the flow rate of supplied ultrapure water according to the concentration of circulating acid passing through the absorption tower, it is possible to enable stable concentration control through automatic control of the concentration of circulating acid.

Additionally, by providing the mixer in each of the absorption unit and the stripping unit to provide ultrapure water individually, it is possible to promote easy control of acid concentration. This reduces a deviation in acid concentration, which is advantageous in obtaining pure sulfuric acid.

Additionally, by discharging remaining foreign substances resulting from vaporization of sulfur trioxide, i.e., concentrated sulfur trioxide, from the vaporizer, it is possible to achieve a desired purification level and obtain pure sulfuric acid.

Additionally, by supplying the first mixed acid and the second mixed acid, which are mixtures of primary PSA and ultrapure water, to the absorption unit and the stripping unit from the first mixer and the second mixer, an exothermic reaction occurs evenly throughout the absorption unit and the stripping unit, thereby eliminating the possibility of degrading the durability of internal equipment. Also, there is no need for separate energy input or equipment for circulation of circulating acid in the stripping unit, thereby facilitating simplification of process equipment.

## Claims

1. A system for producing pure sulfuric acid, the system comprising:
a vaporization unit that receives liquid SO₃ (L-SO₃) and generates SO₃ gas;
an absorption unit that receives the SO₃ gas from the vaporizer unit and mixes the SO₃ gas with ultrapure water to generate and circulate primary pure sulfuric acid (PSA);
a stripping unit that strips gases contained in the primary PSA supplied from the absorption unit and mixes the primary PSA with the ultrapure water to generate a secondary PSA with a relatively lower concentration than the primary PSA; and
a storage unit that stores the secondary PSA;
wherein the absorption unit comprises:
an absorption tower that receives the SO₃ gas from the vaporizer unit;
a receiver tank that is provided downstream of the absorption tower and receives the circulating primary PSA;
a circulation pump that is provided on a circulation path on one side of the receiver tank, circulates the primary PSA, and supplies a part of the primary PSA to the stripping unit; and
an absorption acid coolers that is provided on the circulation path;
wherein a weigher is provided on one side of the receiver tank to detect a level of the receiver tank;
wherein the weigher of the receiver tank cooperates with the vaporization unit with consideration of an amount of steam supplied to the vaporization unit.

2. The system of claim 1, wherein the system is configured to have the liquid L-SO₃ being provided by forming SO₃ gas through a sulfuric acid converter using smelting gas and then evaporating and condensing fuming sulfuric acid formed through an oleum tower.

3. The system of claim 1, wherein a spent pump is provided downstream of the vaporization unit to discharge concentrated L-SO₃ to a spent tank.

4. The system of claim 2, wherein a hot water tank is provided on one side of the vaporization unit to supply hot water to the vaporization unit when necessary.

5. The system of claim 1, wherein a first mixer that supplies a first mixed acid, which is a mixture of the circulating primary PSA supplied from the receiver tank and the ultrapure water, to the absorption tower is provided upstream of the absorption tower.

6. The system of claim 1, wherein the weigher of the receiver tank is a load cell-type weigher that is provided between a frame that receives a load of the receiver tank and a support that supports the frame.

7. The system of claim 1, wherein a concentration meter is provided between the absorption tower and the receiver tank to measure a concentration of the primary PSA supplied from the absorption tower to the receiver tank through in-line measurement.

8. The system of claim 7, wherein the concentration meter cooperates with the absorption tower with consideration of a flow rate of the ultrapure water supplied to the absorption tower.

9. The system of claim 1, wherein the stripping unit comprises: a stripping tower that receives the primary PSA from the absorption unit; and
a stripped acid cooler that is connected to the stripping tower.

10. The system of claim 9, wherein a second mixer that supplies a second mixed acid, which is a mixture of the primary PSA supplied from the absorption unit and the ultrapure water, to the stripping tower is further provided upstream of the stripping tower.

11. The system of claim 10, wherein the second mixer comprises:
a mixing tank;
an ultrapure water introduction pipe that is provided on one side of the mixing tank and supplies the ultrapure water into the mixing tank;
a circulating acid supply pipe that is connected to one side of the ultrapure water introduction pipe and supplies the primary PSA supplied from the absorption unit into the mixing tank; and
a mixed acid discharge pipe that is provided on a lower side of the mixing tank and discharges the second mixed acid, which is a mixture of the primary PSA and the ultrapure water, from the mixing tank.

12. The system of claim 11, wherein the circulating acid supply pipe is formed in a double pipe structure with the ultrapure water introduction pipe, and mixes the primary PSA with the ultrapure water at an end of the circulating acid supply pipe and supplies a mixed acid into the mixing tank.

## Patentansprüche

1. System zum Herstellen von reiner Schwefelsäure, wobei das System aufweist:
eine Verdampfungseinheit, die flüssiges SO₃ (L-SO₃) empfängt und SO₃-Gas erzeugt,
eine Absorptionseinheit, welche das SO₃-Gas von der Verdampfungseinheit empfängt und das SO₃-Gas mit ultrareinem Wasser mischt, um primäre reine Schwefelsäure (PSA) zu erzeugen und zu zirkulieren,
eine Abtrenneinheit, welche Gase, die in der primären PSA, die von der Absorptionseinheit zugeführt wird, enthalten sind, abtrennt und die primäre PSA mit dem ultrareinen Wasser mischt, um eine sekundäre PSA mit einer relativ geringeren Konzentration als die primäre PSA zu erzeugen, und
eine Speichereinheit, welche die sekundäre PSA speichert,
wobei die Absorptionseinheit aufweist:
einen Absorptionsturm, welcher das SO₃-Gas von der Verdampfungseinheit empfängt,
einen Aufnahmetank, der stromabwärts des Absorptionsturms bereitgestellt ist und die zirkulierende primäre PSA aufnimmt,
eine Zirkulationspumpe, die in einem Zirkulationspfad an einer Seite des Aufnahmetanks bereitgestellt ist, das primäre PSA zirkuliert und einen Teil des primären PSA der Abtrenneinheit zuführt, und
einen Absorption-Säure-Kühler, der auf dem Zirkulationspfad bereitgestellt ist,
wobei eine Wiegeeinrichtung an einer Seite des Aufnahmetanks bereitgestellt ist, um einen Füllstand des Aufnahmetanks zu erfassen,
wobei die Wiegeeinrichtung des Aufnahmetanks unter Berücksichtigung einer der Verdampfungseinheit zugeführten Dampfmenge mit der Verdampfungseinheit zusammenwirkt.

2. System nach Anspruch 1, wobei das System konfiguriert ist, um das flüssige L-SO₃ bereitgestellt zu haben durch Bilden von SO₃-Gas mittels eines Schwefelsäurekonverters unter Verwendung von Schmelzgas und anschließendem Verdampfen und Kondensieren von rauchender Schwefelsäure, die durch einen Oleumturm gebildet wird.

3. System nach Anspruch 1, wobei stromabwärts der Verdampfungseinheit eine Ausbringpumpe bereitgestellt ist, um konzentriertes L-SO₃ an einen Ausbringtank abzugeben.

4. System nach Anspruch 2, wobei an einer Seite der Verdampfungseinheit ein Heißwassertank bereitgestellt ist, um der Verdampfungseinheit bei Bedarf Heißwasser zuzuführen.

5. System nach Anspruch 1, wobei stromaufwärts des Absorptionsturms ein erster Mischer bereitgestellt ist, der eine erste gemischte Säure, die ein Gemisch aus zirkulierender primärer PSA, die aus dem Aufnahmetank zugeführt wird, und dem ultrareinen Wasser ist, dem Absorptionsturm zuführt.

6. System nach Anspruch 1, wobei die Wiegeeinrichtung des Aufnahmetanks eine Last-Zell-Typ-Wiegeeinrichtung ist, die zwischen einem Rahmen, der eine Last des Aufnahmetanks aufnimmt, und eine, Halter, der den Rahmen hält, bereitgestellt ist.

7. System nach Anspruch 1, wobei zwischen dem Absorptionsturm und dem Aufnahmetank eine Konzentrationsmesseinrichtung bereitgestellt ist, um eine Konzentration der primären PSA, die vom Absorptionsturm zum Aufnahmetank geführt wird, durch Inline-Messung zu messen.

8. System nach Anspruch 7, wobei die Konzentrationsmesseinrichtung unter Berücksichtigung einer Flussrate des ultrareinen Wassers, das dem Absorptionsturm zugeführt wird, mit dem Absorptionsturm zusammenwirkt.

9. System nach Anspruch 1, wobei die Abtrenneinheit aufweist: einen Abtrennturm, welcher die primäre PSA von der Absorptionseinheit aufnimmt, und
einen abgetrennte-Säure-Kühler, der mit dem Abtrennturm verbunden ist.

10. System nach Anspruch 9, wobei stromaufwärts des Abtrennturms ferner ein zweiter Mischer bereitgestellt ist, der dem Abtrennturm eine zweite gemischte Säure zuführt, die ein Gemisch aus der primären PSA, die von der Absorptionseinheit zugeführt wird, und dem ultrareinen Wasser ist.

11. System nach Anspruch 10, wobei der zweite Mischer aufweist:
einen Mischtank,
eine ultrareines-Wasser-Einleitung-Leitung, die an einer Seite des Mischtanks bereitgestellt ist und das ultrareine Wasser in den Mischtank zuführt,
eine zirkulierend-Säure-Zufuhr-Leitung, die mit einer Seite der ultrareines-Wasser-Einleitung-Leitung verbunden ist und die primäre PSA, die von der Absorptionseinheit zugeführt wird, in den Mischtank einleitet, und
eine gemischte-Säure-Abgabe-Leitung, die an einer unteren Seite des Mischtanks bereitgestellt ist und die zweite gemischte Säure, die eine Mischung aus der primären PSA und dem ultrareinen Wasser ist, aus dem Mischtank abgibt.

12. System nach Anspruch 11, wobei die zirkulierend-Säure-Zufuhr-Leitung in einer Doppel-Leitung-Struktur mit der ultrareines-Wasser-Einleitung-Leitung ausgebildet ist und die primäre PSA an einem Ende der zirkulierende-Säure-Einleitung-Leitung mit dem ultrareinen Wasser mischt und eine gemischte Säure in den Mischtank zuführt.

## Revendications

1. Système de production d'acide sulfurique pur, le système comprenant :
une unité de vaporisation qui reçoit du SO₃ liquide (L-SO₃) et génère du gaz SO₃ ;
une unité d'absorption qui reçoit le gaz SO₃ provenant de l'unité de vaporisation et mélange le gaz SO₃ avec de l'eau ultrapure pour générer et faire circuler de l'acide sulfurique pur (PSA) primaire ;
une unité de séparation qui sépare les gaz contenus dans le PSA primaire fourni depuis l'unité d'absorption et mélange le PSA primaire avec l'eau ultrapure pour générer un PSA secondaire ayant une concentration relativement plus faible que celle du PSA primaire ; et
une unité de stockage qui stocke le PSA secondaire ;
dans lequel l'unité d'absorption comprend :
une tour d'absorption qui reçoit le gaz SO₃ provenant de l'unité de vaporisation ;
un réservoir récepteur qui est prévu en aval de la tour d'absorption et reçoit le PSA primaire en circulation ;
une pompe de circulation qui est prévue sur un chemin de circulation sur un côté du réservoir récepteur, fait circuler le PSA primaire et fournit une partie du PSA primaire à l'unité de séparation ; et
un refroidisseur d'acide d'absorption qui est prévu sur le chemin de circulation ;
dans lequel un peseur est prévu sur un côté du réservoir récepteur pour détecter un niveau du réservoir récepteur ;
dans lequel le peseur du réservoir récepteur coopère avec l'unité de vaporisation en tenant compte d'une quantité de vapeur fournie à l'unité de vaporisation.

2. Système selon la revendication 1, dans lequel le système est configuré pour que le L-SO₃ liquide soit fourni en formant du gaz SO₃ par l'intermédiaire d'un convertisseur d'acide sulfurique utilisant du gaz de fusion, puis en évaporant et en condensant l'acide sulfurique fumant formé par l'intermédiaire d'une tour d'oléum.

3. Système selon la revendication 1, dans lequel une pompe de rejet est prévue en aval de l'unité de vaporisation pour évacuer le L-SO₃ concentré vers un réservoir de rejet.

4. Système selon la revendication 2, dans lequel un réservoir d'eau chaude est prévu sur un côté de l'unité de vaporisation pour fournir de l'eau chaude à l'unité de vaporisation lorsque cela est nécessaire.

5. Système selon la revendication 1, dans lequel un premier mélangeur qui fournit un premier acide mélangé, qui est un mélange du PSA primaire en circulation fourni depuis le réservoir récepteur et de l'eau ultrapure, à la tour d'absorption est prévu en amont de la tour d'absorption.

6. Système selon la revendication 1, dans lequel le peseur du réservoir récepteur est un peseur de type cellule de charge qui est prévue entre un cadre recevant une charge du réservoir récepteur et un support supportant le cadre.

7. Système selon la revendication 1, dans lequel un dispositif de mesure de concentration est prévu entre la tour d'absorption et le réservoir récepteur pour mesurer une concentration du PSA primaire fourni depuis la tour d'absorption vers le réservoir récepteur par une mesure en ligne.

8. Système selon la revendication 7, dans lequel le dispositif de mesure de concentration coopère avec la tour d'absorption en tenant compte d'un débit de l'eau ultrapure fournie à la tour d'absorption.

9. Système selon la revendication 1, dans lequel l'unité de séparation comprend : une tour de séparation qui reçoit le PSA primaire provenant de l'unité d'absorption ; et
un refroidisseur d'acide séparé qui est relié à la tour de séparation.

10. Système selon la revendication 9, dans lequel un deuxième mélangeur qui fournit un deuxième acide mélangé, qui est un mélange du PSA primaire fourni depuis l'unité d'absorption et de l'eau ultrapure, à la tour de séparation est en outre prévu en amont de la tour de séparation.

11. Système selon la revendication 10, dans lequel le deuxième mélangeur comprend :
un réservoir de mélange ;
un tuyau d'introduction d'eau ultrapure qui est prévu sur un côté du réservoir de mélange et alimente le réservoir de mélange en eau ultrapure ;
un tuyau d'alimentation en acide de circulation qui est raccordé à un côté du tuyau d'introduction d'eau ultrapure et alimente le PSA primaire fourni depuis l'unité d'absorption dans le réservoir de mélange ; et
un tuyau d'évacuation d'acide mélangé qui est prévu sur un côté inférieur du réservoir de mélange et évacue le deuxième acide mélangé, qui est un mélange du PSA primaire et de l'eau ultrapure, hors du réservoir de mélange.

12. Système selon la revendication 11, dans lequel le tuyau d'alimentation en acide de circulation est formé selon une structure à double tuyau avec le tuyau d'introduction d'eau ultrapure, et mélange le PSA primaire avec l'eau ultrapure à une extrémité du tuyau d'alimentation en acide de circulation et alimente le réservoir de mélange en acide mélangé.
